# EUROPEAN PATENT APPLICATION

(11) **EP 3 528 184 A1**
(43) Date of publication of application: **21.08.2019**
(21) Application number: 19156996.1
(22) Date of filing: 13.02.2019
(51) Int. Cl.: G06Q 10/02

(54) **MANAGEMENT SYSTEM, MANAGEMENT METHOD, AND RECORDING MEDIUM FOR CAR SHARING**

(30) Priority: 16.02.2018 JP 2018026042
(71) Applicant: TOYOTA JIDOSHA KABUSHIKI KAISHA, Toyota-shi Aichi-ken, 471-8571 (JP)
(72) Inventor: FUJIWARA, Yasuhisa, Toyota-shi, Aichi-ken,, 471-8571 (JP); NISHIMURA, Kazuya, Toyota-shi, Aichi-ken,, 471-8571 (JP)
(74) Representative: Kuhnen & Wacker Patent- und Rechtsanwaltsbüro PartG mbB

(57) **Abstract**

A management system (10) includes a reservation acceptance means (11) that accepts a car sharing reservation procedure from a mobile communication terminal (20) of a user via a communication network (60), and a communication means (12) that transmits to the mobile communication terminal (20) a message that suggests using any of a taxi, a ride share car or a sharing bicycle which the user is expected to use to move to a location of a sharing car for which the reservation procedure has been performed or move from a return location of the sharing car, along with a presentation of a discount fee of the sharing car.

## Description

### BACKGROUND OF THE INVENTION

### 1. Field of the Invention

The invention relates to a management system, a management method, and a recording medium.

### 2. Description of Related Art

Due to development of information communication technologies, changes in lifestyle, or economic reasons, there is a change from an era of personal possession of a thing to an era of sharing the thing among communities. In car sharing, members can share a vehicle and can check a usage situation of the vehicle and reserve a usage via the Internet or the like. A lending location and a return location of a sharing car are often selected to be convenient locations, such as a parking lot in the vicinity of a residential area or in the vicinity of a station, for the members to use. With such a car sharing, the user can reduce a cost of purchasing the vehicle, a maintaining expense, a parking fee, and the like compared with a case where the user owns the vehicle. Under such circumstances, various techniques for promoting a use of the car sharing have been developed. For example, Japanese Unexamined Patent Application Publication No. 2017-199236 proposes a technique for promoting a use of car sharing through a preferential treatment service that can be received when a user of car sharing uses a sharing car in combination with other transportation facilities such as a railroad.

### SUMMARY OF THE INVENTION

A location of the sharing car is not necessarily in a downtown area where the transportation facilities are substantial, but it can also be in a depopulated area where the transportation facilities are not sufficiently substantial. In such an area where the transportation facilities are not sufficiently substantial, a transportation means for moving to the location of the sharing car or transportation means for moving from a return location of the sharing car in such an area is not sufficiently provided, and a usage frequency of the sharing car in such an area tends to be relatively lower than a usage frequency of the sharing car in the area where the transportation facilities are substantial.

Therefore, the invention provides a management system capable of promoting the use of the car sharing.

A management system according to a first aspect of the invention includes a reservation acceptance means that accepts a car sharing reservation procedure from a mobile communication terminal of a user via a communication network, and a communication means that transmits to the mobile communication terminal a message that suggests using any of a taxi, a ride share car or a sharing bicycle which the user is expected to use to move to a location of a sharing car for which the reservation procedure has been performed or move from a return location of the sharing car, along with a presentation of a discount fee of the sharing car.

A management method according to a second aspect of the invention includes a step in which a computer system accepts a car sharing reservation procedure from a mobile communication terminal of a user via a communication network, and a step of transmitting to the mobile communication terminal a message that suggests using any of a taxi, a ride share car or a sharing bicycle which the user is expected to use to move to a location of a sharing car for which the reservation procedure has been performed or move from a return location of the sharing car, along with a presentation of a discount fee of a sharing car.

A third aspect of the invention is a non-transitory computer-readable recording medium storing a management program causing a computer system to execute the management method according to the second aspect.

According to the aspects of the invention, use of the car sharing can be promoted.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an explanatory diagram illustrating functional blocks of a management system according to a first embodiment of the invention;
FIG. 2 is a diagram for describing a management method according to the first embodiment of the invention;
FIG. 3 is an explanatory diagram illustrating functional blocks of a management system according to a second embodiment of the invention;
FIG. 4 is an explanatory diagram illustrating functional blocks of a management system according to a third embodiment of the invention; and
FIG. 5 is an explanatory diagram illustrating functional blocks of a management system according to a fourth embodiment of the invention.

### DETAILED DESCRIPTION OF EMBODIMENTS

Hereinafter, embodiments of the invention will be described with reference to the drawings. Here, the same reference numerals denote the same components, and duplicate description will be omitted.

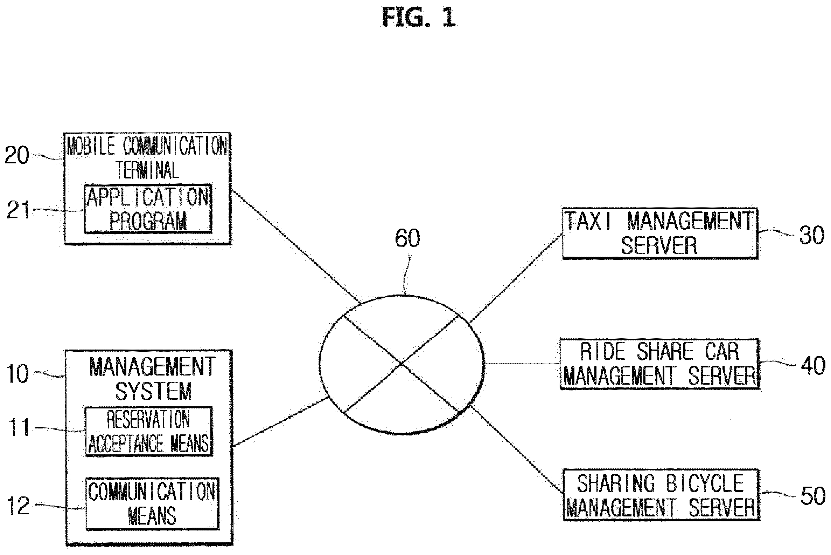

FIG. 1 is an explanatory diagram illustrating functional blocks of a management system 10 according to a first embodiment of the invention. The management system 10 is a computer system that manages a sharing car (management of reservation reception, lending and returning, and the like). A "Sharing car" means a vehicle to be used for sharing (for example, joint use between members). A "vehicle" includes vehicles (for example, automobiles, motorized bicycles, light vehicles, and the like) under the Road Traffic Act. Each sharing car has a Global Positioning System (GPS) function, and can notify its position information to the management system 10 via wireless communication.

The management system 10 includes a processor, a storage device, and a communication module as its hardware resources, and a management program for executing a management method of a sharing car is stored in the storage device. The management program is interpreted and executed by the processor, whereby functions as a reservation acceptance means 11 and a communication means 12 are realized. These means 11 and 12 are functions realized by a cooperation of hardware resources of the management system 10 and the management program, the details of which will be described later. In addition, the storage device that stores the management program is, for example, a computer-readable recording medium such as a semiconductor memory or a disk medium.

A mobile communication terminal 20 implements an application program 21 for inputting, changing or canceling a reservation of a sharing car. The mobile communication terminal 20 is, for example, a multifunctional mobile phone called a smartphone, a tablet terminal, or the like. The mobile communication terminal 20 is equipped with a GPS function, and can notify its position information to the management system 10 via wireless communication.

A taxi management server 30 is a well-known host computer for cloud computing for managing dispatch of a taxi. A "taxi" means a vehicle to be used for the purpose of transporting a small number of passengers. Each taxi has a GPS function, and can notify its position information to the taxi management server 30 via wireless communication. The taxi management server 30 manages an operation status of each taxi (for example, whether or not it is waiting for a customer, what the current position is, and the like).

A ride share car management server 40 is a well-known host computer for cloud computing for managing dispatch of a ride share car. A "ride share car" means a vehicle to be used for use of ride sharing (riding together). Each ride share car has a GPS function, and can notify its position information to the ride share car management server 40 via wireless communication. The ride share car management server 40 manages an operation status of each ride share car (for example, whether or not it is in a state of riding together, what the current position is, and the like).

A sharing bicycle management server 50 is a well-known host computer for cloud computing for managing sharing bicycles. A "sharing bicycle" means a bicycle to be used for sharing (for example, joint use between members). Each sharing bicycle has a GPS function and can notify its position information to the sharing bicycle management server 50 via wireless communication. The sharing bicycle management server 50 manages a usage status (for example, whether or not it is used, what the current position is, and the like) of each sharing bicycle.

The management system 10, the mobile communication terminal 20, the taxi management server 30, the ride share car management server 40, and the sharing bicycle management server 50 are connected via a communication network 60. The communication network 60 is, for example, a communication network in which a wired network (for example, a local area network (LAN), a wide area network (WAN), a value added network (VAN), or the like) and a wireless network (a mobile communication network, a satellite communication network, a Bluetooth (registered trademark), Wireless Fidelity (WiFi), High Speed Downlink Packet Access (HSDPA), and the like) coexist.

The reservation acceptance means 11 accepts a car sharing reservation procedure from the user's mobile communication terminal 20 via the communication network 60. In the reservation procedure, the position information of the mobile communication terminal 20 is transmitted to the management system 10 and, on a display of the mobile communication terminal 20, for example, position information of one or more sharing cars located near a current position of the mobile communication terminal 20 are superimposed on map information. The user can select a sharing car that the user wishes to use from among the sharing cars displayed on the display of the mobile communication terminal 20. In the reservation procedure, the user uses the mobile communication terminal 20 to input predetermined reservation information (for example, a use start date and time, a use end date and time, a use time, a return location, and the like of the sharing car).

Upon completion of the reservation procedure, the management system 10 obtains, based on location information of the sharing car for which the reservation procedure has been performed and the aforementioned reservation information, information relating to the operation status or the use status of the taxi, the ride share car and the sharing bicycle which the user is expected to use, from the taxi management server 30, the ride share car management server 40, and the sharing bicycle management server 50, respectively. The communication means 12 transmits to the mobile communication terminal 20 a message that suggests using any of the taxi, the ride share car or the sharing bicycle which the user is expected to use to move to the location of the sharing car for which the reservation procedure has been performed or to move from the return location of the sharing car, along with a presentation of a discount fee of the sharing car. In addition, as a billing system of the sharing car, for example, a method of charging according to either one or both of a travel time and a travel distance may be adopted.

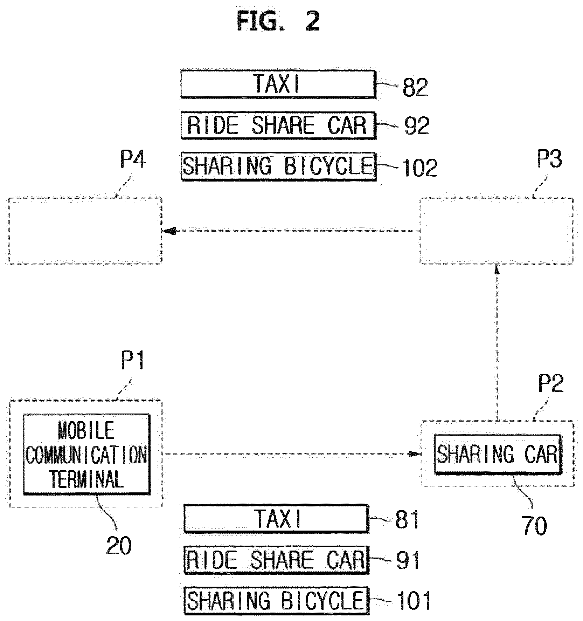

The contents of the message transmitted from the communication means 12 to the mobile communication terminal 20 will be described with reference to FIG. 2. Reference numeral P1 indicates the location (current position) of the mobile communication terminal 20. Reference numeral P2 indicates the location of the sharing car 70 for which the reservation procedure has been performed. Reference numeral P3 indicates the return location of the sharing car 70. Reference numeral P4 indicates a destination (for example, home) to which the user who finishes using the sharing car 70 heads. The return location P3 may be the same position as or a different position from the location P2 of the sharing car 70. In a car sharing service called a round trip method, the return location P3 is the same as the location P2 of the sharing car 70. In a car sharing service called a one way system, the return location P3 is a position different from the location P2 of the sharing car 70. The destination P4 may be the same position as or a position different from the location P1 of the mobile communication terminal 20 at the time when the user performed the reservation procedure.

A message transmitted from the communication means 12 to the mobile communication terminal 20 suggests using any of a taxi 81, a ride share car 91 or a sharing bicycle 101 which the user is expected to use to move, for example, from the location P1 of the mobile communication terminal 20 to the location P2 of the sharing car 70, along with a presentation of a discount fee of the sharing car 70. The discount fee is a fee obtained by subtracting a usage fee of the sharing car 70 when the sharing car 70 is used while any of the taxi 81, the ride share car 91 or the sharing bicycle 101 is used, from a usage fee of the sharing car 70 when the sharing car 70 is used while none of the taxi 81, the ride share car 91 or the sharing bicycle 101 is used.

For example, the message transmitted from the communication means 12 to the mobile communication terminal 20 suggests using any of a taxi 82, a ride share car 92 or a sharing bicycle 102 which the user is expected to use to move from the return location P3 of the sharing car 70 to the destination P4, along with a presentation of a discount fee of the sharing car 70. For example, the discount fee is a fee obtained by subtracting a usage fee of the sharing car 70 when the sharing car 70 is used while any of the taxi 82, the ride share car 92 or the sharing bicycle 102 is used, from a usage fee of the sharing car 70 when the sharing car 70 is used while none of the taxi 82, the ride share car 92 or the sharing bicycle 102 is used.

Furthermore, in consideration of traffic conditions, weather conditions, and the like, the management system 10 may transmit to the mobile communication terminal 20 a message suggesting a particularly recommended one of the taxi, the ride share car or a sharing bicycle which the user is expected to use. For example, in the case of rainy weather, the sharing bicycle is not expected to be used, so the use of the taxi or the sharing car may be suggested. In addition, for example, in a case where it is sunny but traffic congestion is severe, the use of the sharing bicycle may be suggested.

According to the first embodiment of the invention, it is possible to promote the use of the sharing car 70 by suggesting using any of the taxis 81 and 82, the ride share cars 91 and 92 or the sharing bicycles 101 and 102 which the user is expected to use to move to the location P2 of the sharing car 70 for which the reservation procedure has been performed or to move from the return location P3 of the sharing car 70, along with the presentation of the discount fee of the sharing car 70.

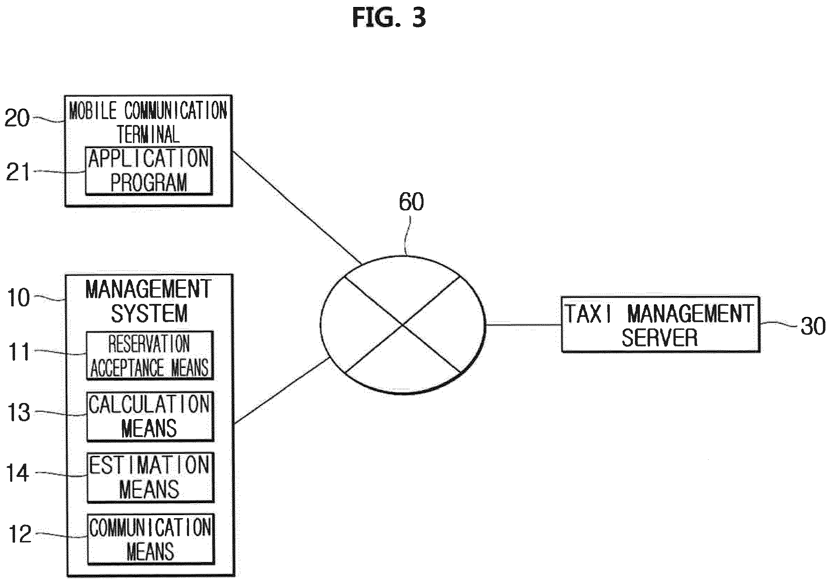

FIG. 3 is an explanatory diagram illustrating functional blocks of a management system 10 according to a second embodiment of the invention. The management system 10 according to the second embodiment is different from the management system 10 according to the first embodiment in that the management system 10 according to the second embodiment is provided with a calculation means 13 and an estimation means 14, but has the same functions as those of the management system 10 according to the first embodiment in other points. The calculation means 13 and the estimation means 14 are functions realized by a cooperation of hardware resources of the management system 10 and a management program, the details of which will be described later. In addition, for the convenience of explanation, illustration of the ride share car management server 40 and the sharing bicycle management server 50 is omitted in FIG. 3, but in the second embodiment, the management system 10 may not be communicatively connected to either or both of the ride share car management server 40 and the sharing bicycle management server 50.

Based on the position information of the mobile communication terminal 20 and the location information of the sharing car 70 for which the reservation procedure has been performed, the calculation means 13 calculates an estimated time required for moving along a route from the location P1 of the mobile communication terminal 20 to the location P2 of the sharing car 70 by the taxi. The calculation means 13 may calculate the estimated time required for moving by taking account of the information relating to the traffic situation. The information relating to the traffic situation may be, for example, information provided by the Japan Road Traffic Information Center. Based on the estimated time required for moving and a use start date and time of the sharing car 70 for which the reservation procedure has been performed, the estimation means 14 estimates scheduled dispatch date and time for dispatching the taxi 81 expected to use by the user to the location P1 of the mobile communication terminal 20. It is desirable to estimate the scheduled dispatch date and time of the taxi 81 so that the user riding the taxi 81 can arrive at the location P1 of the sharing car 70 by the use start date and time.

For example, the message transmitted from the communication means 12 to the mobile communication terminal 20 may suggest moving to the location P2 of the sharing car 70 using the taxi 81 along with a presentation of the scheduled dispatch date and time of the taxi 81 and a discount fee of the sharing car 70. This message may present a usage fee (a usage fee of the sharing car 70) in the case of 1A where the user uses the sharing car 70 without using the taxi 81 and a usage fee (for example, the respective usage fees of the sharing car 70 and the taxi 81) in the case of 2A where the user uses the sharing car 70 with using the taxi 81. The discount fee is, for example, a fee obtained by subtracting the usage fee of the sharing car 70 in the case of 2A from the usage fee of the sharing car 70 in the case of 1A. The usage fee of the taxi 81 is a fee charged when the user travels while sharing the taxi 81 along a route from a dispatch position of the taxi 81 (for example, the location P1 of the mobile communication terminal 20) to the location P2 of the sharing car 70.

When arriving at the location P2 of the sharing car 70, for example, the user is authenticated by allowing authentication information recorded in an IC card acquired at the time of member registration of the car sharing to be read by a card reader of the sharing car 70, whereby it is possible to release a door lock of the sharing car 70 and take out a key from a key box, thus using the sharing car 70. When the use of the sharing car 70 is started, the management system 10 tracks and monitors a current position of the sharing car 70 based on a position information signal transmitted from the sharing car 70. The calculation means 13 calculates an expected date and time at which the sharing car 70 is returned to the return location P3 based on the current position and the current date and time of the sharing car 70. The calculation means 13 may calculate an expected return date and time of the sharing car 70 in consideration of route information (for example, the information on a distance of a route from the current position of the sharing car 70 to the return location P3) set in a navigation device of the sharing car 70. Based on the expected date and time, the estimation means 14 estimates scheduled dispatch date and time for dispatching the taxi 82, which is expected to be used by the user, to the return location P3.

The message transmitted from the communication means 12 to the mobile communication terminal 20 suggests, for example, moving from the return location P3 to the destination P4 by using the taxi 82 along with a presentation of the scheduled dispatch date and time and a discount fee of the sharing car 70. For example, it is desirable that this message be transmitted when the distance between the position of the sharing car 70 and the return location P3 becomes less than a certain threshold value. In addition, this message may present a usage fee (a usage fee of the sharing car 70) in the case of 1B where the user uses the sharing car 70 without using the taxi 82 and a usage fee (for example, the respective usage fees of the sharing car 70 and the taxi 82) in the case of 2B where the user uses the sharing car 70 with using the taxi 82. The discount fee is, for example, a fee obtained by subtracting the usage fee of the sharing car 70 in the case of 2B from the usage fee of the sharing car 70 in the case of 1B. The usage fee of the taxi 82 is a fee charged when the user travels while sharing the taxi 82 along a route from a dispatch position of the taxi 82 (for example, the return location P3) to the destination P4.

According to the second embodiment of the invention, it is possible to promote the use of the sharing car 70 by suggesting using the taxis 81 and 82 which the user is expected to use to move to the location P2 of the sharing car 70 for which the reservation procedure has been performed or to move from the return location P3 of the sharing car 70, along with the presentation of the discount fee of the sharing car 70.

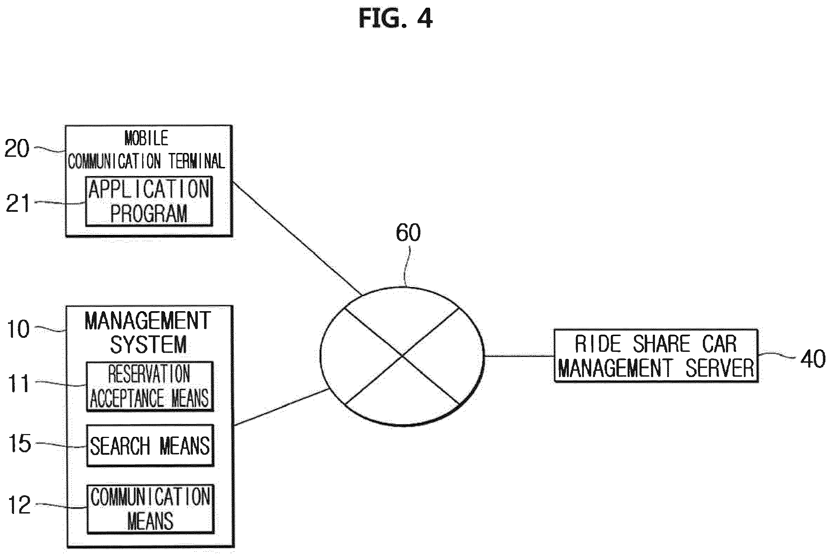

FIG. 4 is an explanatory diagram illustrating functional blocks of a management system 10 according to a third embodiment of the invention. The management system 10 according to the third embodiment is different from the management system 10 according to the first embodiment in that the management system 10 according to the third embodiment is provided with a search means 15, but has the same functions as those of the management system 10 according to the first embodiment in other points. The search means 15 is a function realized by a cooperation of hardware resources of the management system 10 and a management program, the details of which will be described later. In addition, for the convenience of explanation, illustration of the taxi management server 30 and the sharing bicycle management server 50 is omitted in FIG. 4, but in the third embodiment, the management system 10 may not be communicatively connected to either or both of the taxi management server 30 and the sharing bicycle management server 50.

For example, based on the position information of the mobile communication terminal 20 and the location information of the sharing car 70 for which the reservation procedure has been performed, the search means 15 searches for the ride share car 91 that travels at least a part of a route from the position P1 of the mobile communication terminal 20 to the location P2 of the sharing car 70 at a time within a predetermined time from the use start date and time of the sharing car 70 for which the reservation procedure has been performed.

The communication means 12 transmits to the mobile communication terminal 20 a message that suggests moving to the location P2 of the sharing car 70 by using the ride share car 91 along with a presentation of an expected dispatch location and an expected dispatch date and time of the ride share car 91 and a discount fee of the sharing car 70. It is desirable to determine the expected dispatch location and the expected dispatch date and time of the ride share car 91 so that the user riding the ride share car 91 can arrive at the location P1 of the sharing car 70 by the use start date and time. This message may present a usage fee (a usage fee of the sharing car 70) in the case of 1C where the user uses the sharing car 70 without using the ride share car 91 and a usage fee (for example, the respective usage fees of the sharing car 70 and the ride share car 91) in the case of 2C where the user uses the sharing car 70 with using the ride share car 91. The discount fee is, for example, a fee obtained by subtracting the usage fee of the sharing car 70 in the case of 2C from the usage fee of the sharing car 70 in the case of 1C. The usage fee of the ride share car 91 is a fee charged when the user travels while sharing the ride share car 91 along a route from a dispatch position of the ride share car 91 to the location P2 of the sharing car 70.

For example, based on the position information of the return location P3 and the position information of the destination P4, the search means 15 searches for the ride share car 92 that travels at least a part of a route from the return location P3 to the destination P4 at a time within a predetermined time from a use end date and time of the sharing car 70. The communication means 12 transmits to the mobile communication terminal 20 a message that suggests using the ride share car 92 to move to the destination P4 along with a presentation of an expected dispatch location and an expected dispatch date and time of the ride share car 92 and a discount fee of the sharing car 70. This message may present a usage fee (a usage fee of the sharing car 70) in the case of 1D where the user uses the sharing car 70 without using the ride share car 92 and a usage fee (for example, the respective usage fees of the sharing car 70 and the ride share car 92) in the case of 2D where the user uses the sharing car 70 with using the ride share car 92. The discount fee is, for example, a fee obtained by subtracting the usage fee of the sharing car 70 in the case of 2D from the usage fee of the sharing car 70 in the case of 1D. The usage fee of the ride share car 92 is a fee charged when the user travels while sharing the ride share car 92 along a route from a dispatch position of the ride share car 92 to the destination P4.

According to the third embodiment of the invention, it is possible to promote the use of the sharing car 70 by suggesting using the ride share cars 91 and 92 which the user is expected to use to move to the location P2 of the sharing car 70 for which the reservation procedure has been performed or to move from the return location P3 of the sharing car 70, along with the presentation of the discount fee of the sharing car 70.

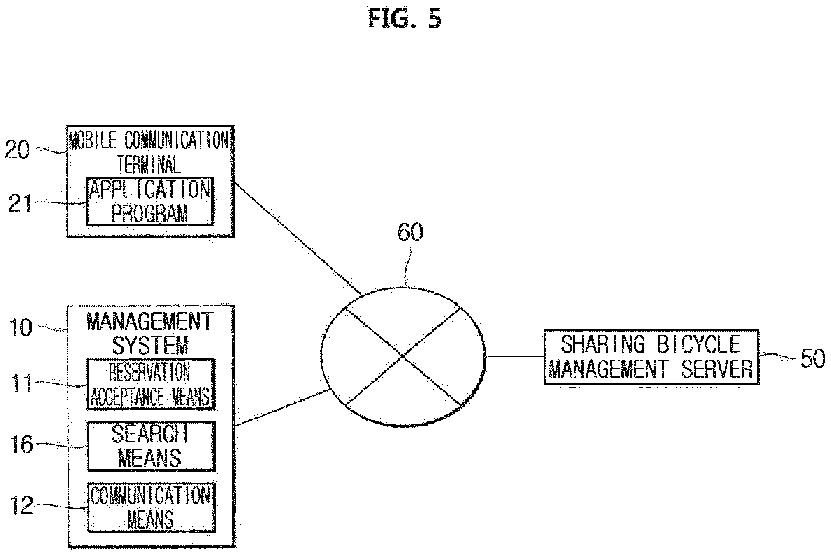

FIG. 5 is an explanatory diagram illustrating functional blocks of a management system 10 according to a fourth embodiment of the invention. The management system 10 according to the fourth embodiment is different from the management system 10 according to the first embodiment in that the management system 10 according to the fourth embodiment is provided with a search means 16, but has the same functions as those of the management system 10 according to the first embodiment in other points. The search means 16 is a function realized by a cooperation of hardware resources of the management system 10 and a management program, the details of which will be described later. In addition, for the convenience of explanation, illustration of the taxi management server 30 and the ride share car management server 40 is omitted in FIG. 5, but in the fourth embodiment, the management system 10 may not be communicatively connected to either or both of the taxi management server 30 and the ride share car management server 40.

For example, based on the position information of the mobile communication terminal 20 and the location information of the sharing car 70 for which the reservation procedure has been performed, the search means 16 searches for an available sharing bicycle 101 located near a route from the position P1 of the mobile communication terminal 20 to the location P2 of the sharing car 70.

The communication means 12 transmits to the mobile communication terminal 20 a message that suggests moving to the location P2 of the sharing car 70 by using the sharing bicycle 101, along with a presentation of a route from the position P1 of the mobile communication terminal 20 to a storage location of the sharing bicycle 101, a route from the storage location of the sharing bicycle 101 to the location P2 of the sharing car 70, and a discount fee of the sharing car 70. This message may present a usage fee (a usage fee of the sharing car 70) in the case of 1E where the user uses the sharing car 70 without using the sharing bicycle 101 and a usage fee (for example, the respective usage fees of the sharing car 70 and the sharing bicycle 101) in the case of 2E where the user uses the sharing car 70 with using the sharing bicycle 101. The discount fee is a fee obtained by subtracting the usage fee of the sharing car 70 in the case of 2E from the usage fee of the sharing car 70 in the case of 1E. The usage fee of the sharing bicycle 101 is a fee charged when the user travels while riding on the sharing bicycle 101 along the route from the storage location of the sharing bicycle 101 to the location P2 of the sharing car 70.

For example, based on the position information of the return location P3 and the position information of the destination P4, the search means 16 searches for an available sharing bicycle 102 located near a route from the return location P3 to the destination P4. The communication means 12 may transmit to the mobile communication terminal 20 a message that suggests moving to the destination P4 by using the sharing bicycle 102, along with a presentation of a route from the return location P3 to the storage location of the sharing bicycle 102, a route from the storage location of the sharing bicycle 102 to the destination P4, and a discount fee of the sharing car 70. This message may present a usage fee (a usage fee of the sharing car 70) in the case of 1F where the user uses the sharing car 70 without using the sharing bicycle 102 and a usage fee (for example, the respective usage fees of the sharing car 70 and the sharing bicycle 102) in the case of 2F where the user uses the sharing car 70 with using the sharing bicycle 102. The discount fee is a fee obtained by subtracting the usage fee of the sharing car 70 in the case of 2F from the usage fee of the sharing car 70 in the case of 1F. The usage fee of the sharing bicycle 102 is a fee charged when the user travels while riding on the sharing bicycle 102 along the route from the storage location of the sharing bicycle 102 to the destination P4.

According to the fourth embodiment of the invention, it is possible to promote the use of the sharing car 70 by suggesting using the sharing bicycles 101 and 102 which the user is expected to use to move to the location P2 of the sharing car 70 for which the reservation procedure has been performed or to move from the return location P3 of the sharing car 70, along with the presentation of the discount fee of the sharing car 70.

In addition, in each of the aforementioned embodiments, the message transmitted from the management system 10 to the mobile communication terminal 20 may include a time required for walking along the route from the position P1 of the mobile communication terminal 20 to the location P2 of the sharing car 70 or a time required for walking the route from the return location P3 to the destination P4 as reference information. Further, when the user wishes to use the sharing car or the sharing bicycle, key information for using the sharing car or the sharing bicycle may be transmitted from the management system 10 to the mobile communication terminal 20.

The embodiments described above are intended to facilitate understanding of the invention and are not intended to limit the invention. The invention may be changed or improved without departing from the gist thereof, and the invention includes equivalents thereof. For example, the management program may include a plurality of software modules which is invoked and executed in a main program. Such a software module is a sub-program modularized in order to execute processing that realizes functions of various means (the reservation acceptance means 11, the communication means 12, the calculation means 13, the estimation means 14, the search means 15, the search means 16). Functions similar to the functions of the various means described above may be realized by using dedicated hardware resources (for example, application specific integrated circuit (ASIC), field programmable gate array (FPGA), or the like) or firmware. The management program can be encoded into a predetermined signal format and transmitted from one computer to another computer via a transmission medium (wired communication network) or a transmission wave (radio wave). In addition, each element included in each of the aforementioned embodiments can be combined as much as technically possible, and combinations thereof are also included in the scope of the invention as long as the features of the invention are included. For example, the first embodiment may be combined with one or more of the second embodiment to the fourth embodiment. In addition, functions of the management system 10 are not necessarily realized by one computer, but also may be realized by a plurality of computers connected to the communication network 60.

## Claims

1. A management system comprising:
a reservation acceptance means (11) that accepts a car sharing reservation procedure from a mobile communication terminal (20) of a user via a communication network (60); and
a communication means (12) that transmits to the mobile communication terminal (20) a message that suggests using any of a taxi (81, 82), a ride share car (91, 92) or a sharing bicycle (101, 102) which the user is expected to use to move to a location of a sharing car (70) for which the reservation procedure has been performed or move from a return location of the sharing car (70), along with a presentation of a discount fee of the sharing car (70).

2. The management system according to claim 1, further comprising:
a calculation means (13) that calculates an estimated time required for moving along a route from a location of the mobile communication terminal (20) to the location of the sharing car (70) by the taxi (81), based on a position information of the mobile communication terminal (20) and a location information of the sharing car (70) for which the reservation procedure has been performed; and
an estimation means (14) that estimates a scheduled dispatch date and time for dispatching the taxi (81) expected to be used by the user to the location of the mobile communication terminal (20), based on the estimated time required for moving and a use start date and time of the sharing car (70) for which the reservation procedure has been performed,
wherein the communication means (12) transmits to the mobile communication terminal (20) a message that suggests moving to the location of the sharing car (70) using the taxi (81) along with a presentation of the scheduled dispatch date and time and the discount fee of the sharing car (70).

3. The management system according to claim 1, further comprising:
a calculation means (13) that calculates an expected date and time at which the sharing car (70) is returned to the return location based on a current position and a current date and time of the sharing car (70) that the user uses; and
an estimation means (14) that estimates a scheduled dispatch date and time for dispatching the taxi (82) expected to be used by the user to the return location, based on the expected date and time,
wherein the communication means (12) transmits to the mobile communication terminal (20) of the user a message that suggests moving from the return location to a destination by using the taxi (82) along with a presentation of the scheduled dispatch date and time and the discount fee of the sharing car (70).

4. The management system according to claim 2 or 3, wherein the message presents a usage fee in a first case where the user uses the sharing car (70) without using the taxi (81, 82) and a usage fee in a second case where the user uses the sharing car (70) with using the taxi (81, 82), and the discount fee is a fee obtained by subtracting the usage fee of the sharing car (70) in the second case from the usage fee of the sharing car (70) in the first case.

5. The management system according to claim 1, further comprising a search means (15) that searches for the ride share car (91) that travels at least a part of a route from a position of the mobile communication terminal (20) to the location of the sharing car (70) at a time within a predetermined time from a use start date and time of the sharing car (70) for which the reservation procedure has been performed based on a position information of the mobile communication terminal (20) and a location information of the sharing car (70) for which the reservation procedure has been performed,
wherein the communication means (12) transmits to the mobile communication terminal (20) a message that suggests moving to the location of the sharing car (70) by using the ride share car (91) along with a presentation of an expected dispatch location and an expected dispatch date and time of the ride share car (91) and the discount fee of the sharing car (70).

6. The management system according to claim 5, wherein the message presents a usage fee in a first case where the user uses the sharing car (70) without using the ride share car (91) and a usage fee in a second case where the user uses the sharing car (70) with using the ride share car (91), and the discount fee is a fee obtained by subtracting the usage fee of the sharing car (70) in the second case from the usage fee of the sharing car (70) in the first case.

7. The management system according to claim 1, further comprising a search means (16) that searches for a sharing bicycle (101) located near a route from a position of the mobile communication terminal (20) to the location of the sharing car (70) based on a position information of the mobile communication terminal (20) and a location information of the sharing car (70) for which the reservation procedure has been performed,
wherein the communication means (12) transmits to the mobile communication terminal (20) a message that suggests moving to the location of the sharing car (70) by using the sharing bicycle (101), along with a presentation of a route from the position of the mobile communication terminal (20) to the sharing bicycle (101), a route from the sharing bicycle (101) to a position of the sharing car (70), and the discount fee of the sharing car (70).

8. The management system according to claim 7, wherein the message presents a usage fee in a first case where the user uses the sharing car (70) without using the sharing bicycle (101) and a usage fee in a second case where the user uses the sharing car (70) with using the sharing bicycle (101), and the discount fee is a fee obtained by subtracting the usage fee of the sharing car (70) in the second case from the usage fee of the sharing car (70) in the first case.

9. A management method comprising:
a step in which a computer system accepts a car sharing reservation procedure from a mobile communication terminal (20) of a user via a communication network (60); and
a step of transmitting to the mobile communication terminal (20) a message that suggests using any of a taxi (81, 82), a ride share car (91, 92) or a sharing bicycle (101, 102) which the user is expected to use to move to a location of a sharing car (70) for which the reservation procedure has been performed or move from a return location of the sharing car (70), along with a presentation of a discount fee of the sharing car (70).

10. A non-transitory computer-readable recording medium storing a management program causing a computer system to execute the management method according to claim 9.
